# NEUE EUROPÄISCHE PATENTSCHRIFT

(11) **EP 2 132 043 B2**
(45) Veröffentlichungstag und Bekanntmachung des Hinweises auf die Entscheidung über den Einspruch: **09.08.2023**
(45) Hinweis auf die Patenterteilung: 12.01.2011
(21) Anmeldenummer: 08716179.0
(22) Anmeldetag: 03.03.2008
(51) Int. Cl.: B41M 5/50, B32B 29/06, D21H 17/20, D21H 17/33, D21H 19/76, D21H 19/84

(54) **VERFAHREN ZUM HERSTELLEN EINES FLÄCHIGEN, BEDRUCKTEN BAUTEILS**
METHOD FOR PRODUCING A FLAT, PRINTED COMPONENT
PROCÉDÉ POUR PRODUIRE UN ÉLÉMENT PLAN IMPRIMÉ

(30) Priorität: 15.03.2007 DE 102007013133
(43) Veröffentlichungstag der Anmeldung: 16.12.2009
(73) Patentinhaber: Flooring Industries Limited, SARL, 8070 Bertrange (LU)
(72) Erfinder: TÜNTE, Udo, 46348 Raesfeld (DE); SCHWITTE, Richard, 48172 Gescher (DE); PETERSEN, Frank, 48653 Coesfeld (DE)
(74) Vertreter: Valea AB
(86) Internationale Anmeldenummer: PCT/EP2008/001658
(87) Internationale Veröffentlichungsnummer: WO 2008/110276

(56) Entgegenhaltungen:
- EP-A- 1 108 529
- EP-A- 1 749 676
- EP-A2- 1 580 010
- WO-A-2006/130708
- DE-T2- 69 304 774
- DE-Z Das Papier 3/2006, S. 38-45
- Deppe Hans-Joachim, Kurt Ernst: "Taschenbuch der Spanplattentechnik" In: "Taschenbuch der Spanplattentechnik", 2000 pages 320-335,

## Beschreibung

Die Erfindung betrifft ein Verfahren zum Herstellen eines flächigen, bedruckten Bauteils, insbesondere für Boden-, Wand-, Decken- und/oder Möbelanwendungen, wobei auf einen flächigen Grundkörper des Bauteils eine beharzte, mit einer Farbschicht bedruckte Papierschicht unter Druck- und Hitzeeinfluß aufgebracht wird, wobei die Papierschicht nicht vollständig durchbeharzt ist und wobei die Oberfläche der Papierschicht zumindest teilweise, vorzugsweise zumindest im wesentlichen harzfrei ist.

Ein Verfahren zum Herstellen eines flächigen, bedruckten Bauteils der eingangs genannten Art, eine dafür verwendbare Papierbahn oder -schicht sowie ein bedrucktes flächiges Bauteil der zuvor genannten Art sind aus der EP 1 749 676 A1 bekannt. Die EP 1 749 676 A1 betrifft konkret ein Verfahren und eine Vorrichtung zum Herstellen einer mittels eines Tintenstrahldruckverfahrens bedruckbaren Papierbahn sowie einen mittels dieses Verfahrens bedruckbaren Gegenstand. Bei dem Gegenstand kann es sich um Platten oderTafeln handeln.

Bei der EP 1 749 676 A1 geht es darum, ein Tintenstrahldruckverfahren zur Verfügungzustellen, wobei das Druckergebnis auf der Oberfläche der zu bedruckenden Gegenstände hinsichtlich des Aussehens höchsten Qualitätserfordemissen entspricht. Hierzu ist beim Stand der Technik vorgesehen, daß eine längs ihrer gesamten Dicke für flüssiges Kunstharz saugfähige Papierbahn von einer Seite her derart mit flüssigem Kunstharz getränkt wird, daß das Kunstharz die Papierbahn nicht vollständig durchdringt, so daß die andere Seite der Papierbahn zumindest weitgehend frei von Kunstharz ist. Letztlich weist die aus der EP 1 749 676 A1 bekannte Papierbahn einen oberseitigen, im wesentlichen harzfreien Bereich auf, der etwa 50% der Dicke der Papierbahn ausmacht.

Durch das bekannte Verfahren sollen Oberflächen geschaffen werden, die hinsichtlich ihrer für das Bedrucken erforderlichen Eigenschaften konventionellen Papieroberflächen entsprechen, die durch die Auswahl des Papiers und der Färbeflüssigkeitoptimal an das angestrebte Druckergebnis angepaßt sein sollen.

Allerdings ist im Zusammenhang mit der aus der EP 1 749 676 A1 bekannten, halb durchbeharzten Papierbahn festgestellt worden, daß es in Abhängigkeit des eingesetzten Papiermaterials und der verwendeten Tinte gerade bei hoher Farbdichte und/oder hohem Wasseranteil dazu kommen kann, daß die mit der Papierbahn in Berührung kommende Tinte im oberen, nicht oder nur geringfügig beharzten Bereich verläuft und sich hierdurch der sogenannte Löschblatteffekt ergibt. Die Folge ist ein relativ unbefriedigendes Druckergebnis.

Aufgabe der vorliegenden Erfindung ist es, hier Abhilfe zu schaffen.

Zur Lösung der zuvor genannten Aufgabe ist bei einem Verfahren der eingangs genannten Art erfindungsgemäß vorgesehen, daß die aufgebrachte Farbschicht während dem Drucken mittels wenigstens einer Heizeinrichtung getrocknet wird, daß die Heiztemperatur zwischen 30°C und 150°C liegt, so daß sich eine unmittelbare Trocknung von aufgebrachter Tinte ergibt, wobei die Tinte wasserhaltig ist und die Heizeinrichtung eine Infrarot-, insbesondere NIR-, und/oder eine Mikrowellenheizeinrichtung ist, und daß die Papierschicht im Kurztaktpressverfahren mit dem Grundkörper und einer Schutzschicht, die ebenfalls beharzt und auf die Farbschicht aufgebracht ist, verpresst wird, wobei die Temperatur beim Verpressen zwischen 140°C und 200°C liegt. Gemäß einer bevorzugten Ausführungsform ist es weiterhin vorgesehen, daß die Papierschicht nicht vollständig durchbeharzt ist, wobei die Oberfläche der Papierschicht zumindest teilweise, vorzugsweise zumindest im wesentlichen harzfrei ist, und wobei auf die Oberseite der Papierschicht eine separate, auf der Papierschicht aufliegende Farbaufnahmeschicht aufgebracht wird, die zum Aufbringen der Farbschicht vorgesehen ist. Im Zusammenhang mit der vorliegenden Erfindung ist festgestellt worden, daß sich hervorragende Druckergebnisse insbesondere dann erzielen lassen, wenn einerseits ein nicht vollständig durchbeharztes Papier und andererseits ein vorzugsweise relativ dünne Farbaufnahmeschicht vorgesehen sind. Die Farbaufnahmeschicht, die auf der Papierschicht aufliegt und/oder zumindest oberseitig in der Papierschicht vorgesehen ist, nimmt zunächst die Farbschicht beim Bedrucken auf, so daß die Tinte nicht unmittelbar in Kontakt mit den Fasern der Papierschicht kommt. Bevorzugt ist die Dicke der Farbaufnahmeschicht auf die Farbdichte und/oder den Wasseranteil der Farbschicht dahingehend abgestimmt, daß die Druckfarbe zwar die Farbaufnahmeschicht durchdringen und bis in den oberen Bereich der Papierschicht gelangen kann, dort jedoch nicht verläuft. Anders als bei dem aus der EP 1 749 676 A1 bekannten Verfahren ist es bei der Erfindung also so, daß die Farbschicht unmittelbar auf die Farbaufnahmeschicht und gerade nicht direkt auf das Papier der Papierschicht aufgebracht wird.

Damit der erfindungsgemäße Vorteil an jeder Stelle der Papierschicht erzielt werden kann, ist die Farbaufnahmeschicht vollflächig auf der gesamten Oberseite der Papierschicht vorgesehen, wobei die Oberseite der Papierschicht vollständig von der Farbaufnahmeschicht abgedeckt wird.

Wenngleich es grundsätzlich möglich ist, die separate Farbaufnahmeschicht nach der vorliegenden Erfindung unmittelbar auf einer solchen teilbeharzten Papierbahn vorzusehen, wie sie aus der EP 1 749 676 A1 bekannt ist, bietet es sich besonders an, daß die Papierschicht derart definiert von der Unterseite her beharzt wird, daß der der Druckseite zugewandte obere Papierschichtbereich mit geringem oder ohne Harzanteil sich über maximal 30% der Dicke der Papierschicht erstreckt. Bevorzugt erstreckt sich der obere Papierschichtbereich mit geringem oder ohne Harzanteil über lediglich maximal 20% der Dicke der Papierschicht und weiter bevorzugt über maximal 10% der Dicke der Papierschicht, wobei jeder Einzelwert zwischen 0,1% der Dicke der Papierschicht und 30% der Dicke der Papierschicht möglich und ausdrücklich als erfindungswesentlich vorgesehen ist.

Hinzuweisen ist in diesem Zusammenhangdarauf, daß sich zwischen dem oberen Papierschichtbereich mit geringem oder ohne Harzanteil und dem unteren Papierschichtbereich mit hohem Harzanteil in der Praxis keine exakte Trennlinie ergibt, da bei einer Beharzung von unten her ein Konzentrationsgefälle des Harzes von unten nach oben besteht derart, daß die höchste Konzentration an der Unterseite vorliegt. Der Übergang des oberen Papierschichtbereichs zum unteren Papierschichtbereich zeichnet sich jedoch durch eine abrupte Änderung des Konzentrationsgefälles aus, während das Konzentrationsgefälle von der Unterseite des unteren Papierschichtbereichs zu dessen Oberseite einerseits und von der Unterseite des oberen Papierschichtbereichs dessen Oberseite im wesentlichen konstant ist oder kontinuierlich abnimmt. Im übrigen beziehen sich die vorgenannten Werte der Dicke des oberen Papierschichtbereichs auf den noch nicht verpreßten Zustand der Papierschicht, also wenn die Papierschicht noch nicht auf den Grundkörper des Bauteils unter Druck- und Hitzeeinfluß aufgebracht worden ist.

Darüber hinaus ergibt sich bei der zuvor erwähnten definierten Teilbeharzung ein weiterer, durchaus beachtlicher Vorteil. Üblicherweise wird auf ein bedrucktes Bauteil, jedenfalls wenn es im Bodenbereich eingesetzt wird, eine obere Schutzschicht, die ebenfalls beharzt ist, unter Druck- und Hitzeeinfluß aufgebracht. Bei dem aus der EP 1 749 676 A1 bekannten Bauteil kommt es nach dem Verpressen der Schutzschicht in der Regel dazu, daß zwischen dem Harz der Schutzschicht und dem Harz der Papierschicht ein im wesentlichen harzfreier Schichtbereich bleibt. Da sich das Harz der Schutzschicht mit dem der Papierschicht nicht oder nicht hinreichend verbindet, kann dies unter bestimmten Bedingungen zum Ablösen der Schutzschicht führen. Im Zusammenhang mit der vorliegenden Erfindung ist erkannt worden, daß eine hinreichende Verbindung des Harzes der Papierschicht mit dem der Schutzschicht jedenfalls dann gewährleistet ist, wenn der obere Papierschichtbereich mit geringen oder ohne Harzanteil sich über maximal 30% der Dicke der Papierschicht erstreckt.

Zur Erzielung einer definierten Harzschichtdickein der Papierschicht wird die Menge des der Unterseite zugeführten Harzanteils in Abhängigkeit der Porosität und damit der Saugfähigkeit der Papierschicht und der Viskosität des Harzes verfahrenstechnisch definiert gesteuert. Wird die Beharzung beispielsweise über eine Walze, die durch ein Tauchbad läuft, wobei die Papierschicht mit der Unterseite über eine Walze gerührt wird, vorgenommen, spielen als weitere Prozeßparameter die Eintauchtiefe der Walze, die Oberflächenbeschaffenheit der Walze, der Durchmesser der Walze, der Anpreßdruck zwischen der Papierschicht und der Walze und die Transportgeschwindigkeit der Papierschicht eine Rolle. Es versteht sich, daß Harz auch in anderer Weise auf die Papierschicht aufgebracht werden kann, beispielsweise durch Düsenauftrag.

Zur Erzielung einer definierten Schichtdicke des oberen Papierschichtbereichs bietet es sich im übrigen an, daß die Papierschicht von der Oberseite her definiert mit einer sich nicht mit dem Harz mischenden Sperrflüssigkeit getränkt wird derart, daß sich eine sich über maximal 30% der Dicke der Papierschicht ergebende Sperrschicht für das Harz bildet. Die Aufbringung der Sperrflüssigkeit kann in gleicher Weise wie die Aufbringung des Harzes aber auch grundsätzlich in anderer Weise erfolgen. Nach dem Beharzen der Papierschicht wird die Sperrflüssigkeit verdampft. Der ursprünglich von der Sperrflüssigkeit eingenommene Raum bildet dann den oberen Papierschichtbereich. Da die Erfindung allerdings nicht auf eine definierte Schichtdicke der Harzschicht beschränkt ist, versteht es sich, daß es grundsätzlich auch möglich ist, die Sperrflüssigkeit in der Art zuzugeben, daß letztlich keine definierte Sperrschicht erzeugt wird.

Bevorzugt ist es in diesem Zusammenhang, daß in der Sperrflüssigkeit nach dem Verdampfen in dem oberen Papierschichtbereich verbleibende Feststoffe, insbesondere Pigmente und/oder Bindemittel vorgesehen sind. Bei den Pigmenten kann es sich um Weißpigmente, wie Kaolin, Kalziumcarbonat, Aluminiumhydroxid, Talkum, Titandioxid oder Farbpigmente, wie Eisenoxidpigmente, Ruß, Kupfer, Aluminium oder andere Metallpigmente, oder organische Farbpigmente handeln. Außerdem können auch Flüssigfarbstoffe und/oder Kieselsäuren und/oder Kieselsole vorgesehen sein. Desweiteren können natürliche oder synthetische Bindemittel, wie Stärke, Polyvinylalkohol, Carboxymethyzellulose, Polymerdispersionen auf der Basis von Acrylsäure, Acrylester, Styrol, Butadien, Vinylacetat oder Acrylnitril vorgesehen sein. Derartige Feststoffe unterstützen die Fixierung der Druckfarbe im oberen Papierschichtbereich, sollte die aufgebrachte Druckfarbe durch die Farbaufnahmeschicht hindurch gelangen. Im übrigen ist darauf hinzuweisen, daß die Farbaufnahmeschicht, jedenfalls wenn es sich hierbei um einen Pigmentstrich handelt, sämtliche der vorgenannten Feststoffe für sich oder in beliebiger Kombination aufweisen kann.

Im übrigen bietet es sich an, wenn die Farbaufnahmeschicht in Verbindung oder im Anschluß an das Tränken mit Sperrflüssigkeit aufgebracht wird. Die Farbaufnahmeschicht kann separat oder zusammen mit der Sperrflüssigkeit durch Walzen, Sprühen, Rakeln, Blade-Coating, Luftbürsten, Gußstrich-Verfahren, Filmpressen, Leimpressen, Vorhanggießverfahren und/oder durch Schlitzdüsenauftrag aufgebracht werden. Grundsätzlich kann die Sperrschicht auch ausschließlich durch Partikel der Farbaufnahmeschicht gebildet sein.

Die Erfindung bietet im übrigen die Möglichkeit, daß die Papierschicht mit der Farbaufnahmeschicht vor dem Aufbringen auf den Grundkörper bedruckt wird. So ist es zum einen möglich, nach Herstellen des gegebenenfalls definiert teilbeharzten Papiers dieses zunächst zu bedrucken und das Papier nach dem Bedrucken zu bevorraten, beispielsweise auf Rollen oder auf Bögen. Anschließend kann die bedruckte Papierschicht mit dem Grundkörper des Bauteils unter Druck- und Hitzeeinfluß verpreßt werden, wobei das Harz zunächst aufschmilzt und anschließend unmittelbar aushärtet.

Das erfindungsgemäße Verfahren eignet sich bei der Anwendung in der sogenannten Direktbeschichtung durch das Kurztaktpreßverfahren. Hierbei härtet die teilbeharzte Papierschicht direkt auf der Grundplatte unter Druck und Hitze schmelzend aus. Wesentlich beim Kurztaktpreßverfahren ist zunächst, daß der Grundkörper als Trägerplatte dem Preßdruck, der in der Regel zwischen 200 und 650 N/cm² liegt, nur unwesentlich nachgeben darf. Darüber hinaus dürfen die Grundkörper und die aufzubringenden Papierschichten beim Ein- und Austrag die heißen Preßplatten nicht berühren. Die Temperatur beim Verpressen liegt zwischen 140°C und 200°C. Je jeweilige Temperatur ist abhängig von der Reaktivierungstemperatur des Harzes. Schließlich ist die sogenannte kritische Liegezeit, das heißt die Zeit vom ersten Kontakt der beharzten Papierschicht mit der Preßplatte bis zum Erreichen des notwendigen Preßdruckes, zu beachten. Diese kritische Liegezeit sollte extrem kurz sein.

Wenngleich es grundsätzlich möglich ist, das erfindungsgemäße Verfahren in Verbindung mit allen bekannten Druckverfahren, insbesondere auch dem Tiefdruckverfahren anzuwenden, erfolgt die Bedruckung der Papierschicht vorzugsweise mittels eines digitalen Druckverfahrens, insbesondere eines Tintenstrahldruckverfahrens. Hierbei kommen dann vorzugsweise sogenannte Inkjet-Digitaldrucker zum Einsatz, mit denen sich hervorragende Druckergebnisse erzielen lassen. Darüber hinaus lassen sich - anders als beim Tiefdruckverfahren - Dekore in einfacher Weise rechnergestützt entwerfen und können kurzfristig gedruckt werden. Im übrigen ist es im Unterschied zum Tiefdruckverfahren auch möglich, daß die Papierschicht erst nach dem Beharzen bedruckt wird.

Zur Bedruckung werden dabei bevorzugt lösemittelhaltige Tinte und/oder wasserhaltige Tinten verwendet. Grundsätzlich können auch UV-basierende Farbsysteme verwendet werden. Diese haben allerdings den Nachteil einer Geruchsentwicklung. Außerdem können sich Probleme beim Verpressen ergeben. Erfindungsgemäss werden wasserhaltige Tinten verwendet.

Um ein etwaiges Verlaufen der Tinte bei hohem Farbauftrag in jedem Falle zu vermeiden, bietet es sich an, die Druckseite und damit die Oberseite der Farbaufnahmeschicht nach der Papierherstellung und auch nach dem Beharzen, jedenfalls aber vor dem Bedrucken zu glätten, zu schleifen und/oder insbesondere fein aufzurauhen. Das Glätten, Schleifen und/oder Aufrauhen kann beispielsweise durch spezielle Rakel oder Kalander erfolgen.

Unabhängig von der Aufbringung der Farbaufnahmeschicht und/oder der Glättung bzw. Aufrauhung der Papierschicht ist es erfindungsgemäß vorgesehen, daß die auf die Papierschicht bzw. die Farbaufnahmeschicht aufgebrachte Farbschicht mit einer entsprechenden Heizeinrichtung beheizt bzw. getrocknet wird. Dies kann beispielsweise über entsprechende Gebläse erfolgen. Erfindungsgemäß sind Infrarot-, und insbesondere NIR-Heizeinrichtungen, und/oder Mikrowellenheizeinrichtungen vorgesehen, die unmittelbar auf den Wasseranteil in der Farbschicht wirken. Die Beheizung bzw. Trocknung kann während und/oder nach dem Bedrucken erfolgen. Erfindungsgemäss erfolgt die Trocknung während dem Bedrucken. Hierzu können ein oder mehrere Heizgeräte vorgesehen sein, wobei die Trocknungsstrecke nicht nur punktuell vorgesehen sein, sondern sich auch über einen größeren Bereich erstrecken kann, beispielsweise zwischen 0 und 5 m und insbesondere zwischen 0 und 2 m. Die Temperatur beim Heizen bzw. Trocknen ist abhängig von der Reaktivierungstemperatur des Harzes und liegt

zwischen 30°C und 150°C. Die vorgenannte Beheizung führt zu einer unmittelbaren Trocknung der Tinte und führt im besten Falle zu einer unmittelbaren Trocknung der Tinte auf der Farbaufnahmeschicht, sobald die Tinte vom Druckkopf abgegeben wird. Weil der Beheizung bzw. Trocknung eigenständige erfinderische Bedeutung zukommt, ist die Teilbeharzung mit separater Farbaufnahmeschicht eine bevorzugte Ausführungsform.

Im Zusammenhang mit der Herstellung der Papierschicht ist darauf hinzuweisen, daß nach der eigentlichen Papierherstellung die Beharzung erfolgt. Die Beharzung kann dabei mit nur einem Harz oder gegebenenfalls in mehreren Beharzungsschritten auch mit unterschiedlichen Harzen erfolgen, um bestimmte Eigenschaften der Papierschicht zu erzielen. Nach dem Beharzen kann ein Trocknen der Papierschicht und anschließend das Aufbringen der Farbaufnahmeschicht erfolgen. Hieran kann sich erneut ein Trocknen anschließen. Bei einer alternativen Ausführungsform erfolgt eine sogenannte Naß/Naß-Behandlung. Hierbei wird, bevor das Harz vollständig getrocknet ist, sich also noch in einem flüssigen oder gelierten bzw. angelierten Zustand befindet, die Farbaufnahmeschicht aufgebracht. Dies kann gleichzeitig oder hintereinander erfolgen. Anschließend erfolgt eine gemeinsame Trocknung der beharzten und mit der Farbaufnahmeschicht versehenen Papierschicht.

Nach dem Trocknen wird die Papierschicht entweder auf Bögen geschnitten oder aber als durchgehende Bahn aufgerollt. Grundsätzlich ist es beim erfindungsgemäßen Verfahren auch möglich, daß vor dem Schneiden/Aufrollen noch das Bedrucken erfolgt.

Die Papierschicht kann selbst über ihre Dicke derart teilbeharzt sein, daß die Oberseite der Papierschicht zumindest bereichsweise, vorzugsweise zumindest im wesentlichen harzfrei ist, wobei auf die Oberseite der Papierschicht eine separate Farbaufnahmeschicht aufgebracht ist, die auf der Papierschicht aufliegt und/oder zumindest oberseitig in die Papierschicht eingedrungen ist und auf die die Farbschicht beim Bedrucken aufgebracht wird. Die Farbaufnahmeschicht besitzt relativ gute Barriereeigenschaften gegenüber wäßrigen oder lösemittelhaltigen Substanzen wie Lacken und/oder Druckfarbe, hält also auch bei hoher Farbdichte und/oder hohem Wasseranteil einen Großteil der Tinte vom Papiermaterial der Papierschicht fern. Bei relativ dünnen Farbaufnahmeschichten kann damit auch ein definierter Durchtritt von Druckfarben auf bzw. in die Papierschicht erfolgen. Darüber hinaus führt die Farbaufnahmeschicht in der Regel zu einer Vergleichmäßigung der Druckseite, was wiederum das positive Druckergebnis begünstigt. Im übrigen ist die Farbaufnahmeschicht derart ausgebildet, daß ein Durchtritt des Harzes durch die Farbaufnahmeschicht von ihrer Unterseite her insbesondere beim Verpressen möglich ist.

Die Farbaufnahmeschicht ist vorzugsweise vollflächig und als auf die Oberseite der Papierschicht vollständig abdeckende Schicht ausgebildet. Sie weist dabei vorzugsweise ein Flächengewicht zwischen 0,5 g/m² und 20 g/m² auf.

Bei einer bevorzugten Ausführungsform der Erfindung ist die Farbaufnahmeschicht als Pigmentstrich ausgebildet und weist organische und/oder anorganische Pigmente und/oder Bindemittel auf. Bevorzugt weist der Pigmentstrich Weißpigmente, wie Kaolin, Kalziumcarbonat, Aluminiumhydroxid, Talkum, Titandioxid, oder Farbpigmente, wie Eisenoxidpigmente, Ruß, Kupfer, Aluminium, andere Metallpigmente, oder organische Farbpigmente auf. Der Pigmentstrich kann auch Flüssigfarbstoffe und/oder Kieselsäure und/oder Kieselsole aufweisen. Desweiteren kann der Pigmentstrich natürliche oder synthetische Bindemittel, wie Stärke, Polyvinylalkohol, Carboxymethylzellulose, Polymerdispersionen auf der Basis von Acrylsäure, Acrylester, Styrol, Butadien, Vinylacetat oder Acrylnitril enthalten. Das Verhältnis von Pigment zu Bindemittel im Pigmentstrich liegt bevorzugt zwischen 1:0,05 bis 1:1 und insbesondere 1:0,08 bis 1: 0,35, bezogen auf den Feststoffgehalt.

Bei einer bevorzugten Ausführungsform ist die Farbaufnahmeschicht aus einer Farbaufnahmemasse gebildet, die Partikel mit einem durchschnittlichen Durchmesser < 1.000 nm aufweist. Bevorzugt sind durchschnittliche Durchmesser zwischen 50 nm bis 400 nm, insbesondere zwischen 100 nm und 300 nm und bevorzugt zwischen 150 nm und 250 nm vorgesehen. Durch derart kleine Partikel werden die Fasern der Faserstruktur der Papierschicht im oberseitigen Bereich der Faserstruktur bzw. Papierschicht zumindest im wesentlichen ummantelt, wobei an der Oberseite der Papierschicht offene Zwischenräume der ummantelten Faserstruktur verbleiben. Letztlich sind oberseitig der Papierschicht eine Mehrzahl offener Zwischenräume mit einer Länge > 20 µm, vorzugsweise > 30 µm und insbesondere > 40 µm und/oder einer Öffnungsfläche > 200 µm², vorzugsweise > 500 µm² und insbesondere > 750 µm² vorgesehen. Dabei sind auf der Oberseite pro Flächeneinheit [mm²] durchschnittlich wenigstens ein Zwischenraum, vorzugsweise mehr als drei und insbesondere mehr als zehn Zwischenräume vorgesehen. Bei dieser Ausführungsform können die Partikel der Farbaufnahmeschicht/-masse nicht nur aus den oben genannten Stoffen bestehen, sondern insbesondere als Hauptbestandteile Titandioxid, Bariumsulfat und Silikate aufweisen.

Wie eingangs bereits erwähnt worden ist, weist der obere Papierschichtbereich der Papierschicht einen geringen oder keinen Harzanteil auf. Wenngleich die Dicke des oberen Papierschichtbereichs beliebig sein kann, ist es zur Vermeidung des "Löschblatteffekts" günstig, wenn sich dieser Bereich über maximal 30% der Dicke der Papierschicht erstreckt, wobei jeder beliebige Wert zwischen 0,01% und 30% möglich und erfindungswesentlich ist. Dabei versteht es sich, daß das Material und die Porosität der Papierschicht so gewählt sind, daß eine teilweise Durchdringung der Papierschicht mit Harz und gegebenenfalls der bereits erwähnten Sperrflüssigkeit möglich ist.

Insbesondere wenn die zuvor erwähnte Sperrflüssigkeit in Verbindung mit der Farbaufnahmeschicht aufgebracht wird, können sich im oberen Papierschichtbereich Feststoffe, wie Pigmente und/oder Bindemittel befinden, die dort eingelagert sind. Diese Feststoffe können dann den Materialien entsprechen, die auch in der Farbaufnahmeschicht enthalten sind.

Je nach Anwendungszweck sollte das Flächengewicht der Papierschicht ohne Beharzungsanteil zwischen 30 und 300 g/m², vorzugsweise zwischen 50 und 120 g/m² liegen. Das Flächengewicht des Beharzungsanteils sollte vorzugsweise zwischen 5 und 300 g/m² und insbesondere zwischen 20 und 100 g/m² liegen.

Bei dem Harz selbst handelt es sich um ein reaktivierbares Harz, insbesondere um ein Aminoplast, wie ein Melamin-Harz. Bevorzugt werden Harze aus der Gruppe der Diallylphtalate, Epoxidharze, Harnstoff Formaldehyd-Harze, Harnsäure-Acetylsäureester-Copolyester, Melamin-Formaldehyd-Harze, Melamin-Phenol-Formaldehyd-Harze, Phenol-Formaldehyd-Harze, Poly(meth)-acrylate oder ungesättigter Polyester-Harze verwendet.

Die Oberseite der Farbaufnahmeschicht ist vor oder nach der Beharzung vorzugsweise durch eine sich an die Papierherstellung anschließende zusätzliche mechanische Bearbeitung, beispielsweise über Rakel oder Kalander geglättet, geschliffen und/oder fein aufgerauht, um ein etwaiges unbeabsichtigtes Verlaufen der Druckfarbe zu verhindern.

Es wird ausdrücklich darauf hingewiesen, daß die vorgenannten und nachstehenden Bereichsangaben und Intervalle sämtliche innerhalb der Bereichsangaben und Intervalle liegende Einzelwerte und Zwischenintervalle bzw. Zwischenbereichsangaben umfassen, ohne daß es einer ausdrücklichen Erwähnung von Einzelwerten bzw. Zwischenintervallen oder Zwischenbereichsangaben bedarf.

Nachfolgend werden Ausführungsbeispiele der Erfindung anhand der Zeichnung näher beschrieben. Dabei zeigt
- Fig. 1: eine schematische Querschnittsansicht einer teilbeharzten Papier- schicht, die eine Farbaufnahmeschicht aufweist,
- Fig. 2: eine qualitative Darstellung des Konzentrationsverlaufs des Harzanteils über die Schichtdicke der Papierschicht,
- Fig. 3: eine der Fig. 2 entsprechende Darstellung mit weiteren Konzen- trationsverläufen,
- Fig. 4: eine schematische Querschnittsansicht einer teilbeharzten Papier- schicht mit Farbaufnahmeschicht, die bereits bedruckt ist,
- Fig. 5: eine schematische Querschnittsansicht eines flächigen Bauteils, auf dessen Grundkörper die Papierschicht aufgebracht ist,
- Fig. 6: ein Ablaufschema des erfindungsgemäßen Verfahren und
- Fig. 7: ein alternatives Ablaufschema eines nicht-erfindungsgemäßen Verfahrens.

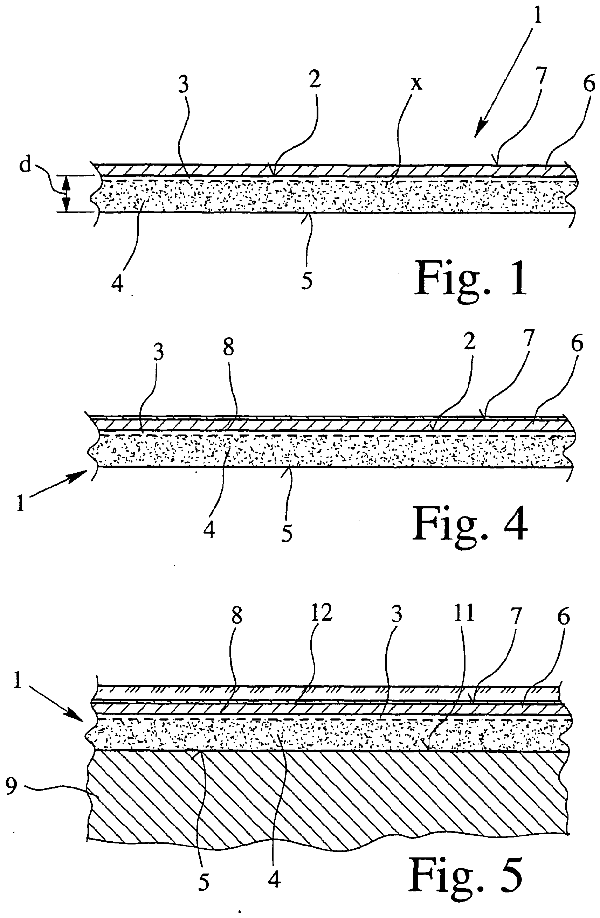

In Fig. 1 ist eine Papierschicht 1 dargestellt. Die Papierschicht 1 besteht aus einem üblichen saug- bzw. flüssigkeitsaufnahmefähigen Papier- bzw. Fasermaterial. Die Papierschicht 1 als solche kann Teil einer Rolle oder eines Bogen sein. In Fig. 1 ist schematisch dargestellt, daß die Papierschicht 1 nur über einen Teil ihrer Dicke d beharzt ist. Hierdurch ergibt sich ein oberer, der Oberseite 2 zugewandter Papierschichtbereich 3 mit geringem oder ohne Harzanteil und ein unterer Papierschichtbereich 4, der von der Unterseite 5 ausgeht und der einen sehr hohen Harzanteil aufweist.

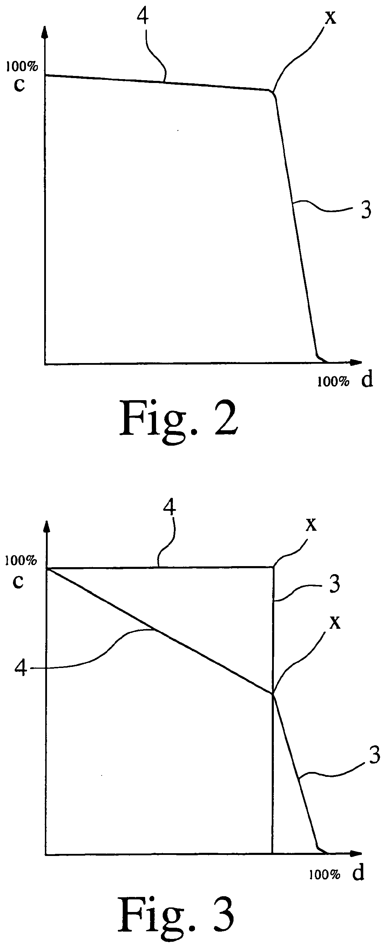

Im in Fig. 1 dargestellten Zustand sind ideale Verhältnisse dargestellt, wobei der obere Papierschichtbereich 3 harzfrei ist, während der untere Papierschichtbereich 4 vollständig durchbeharzt ist. Den Übergang zwischen den beiden Bereichen 3, 4 an der Stelle x verdeutlicht eine gestrichelter Linie. Der in Fig. 1 dargestellte Zustand, das heißt die klare Trennung zwischen den Bereichen 3 und 4 ist derart, daß im oberen Papierschichtbereich 3 kein Harz vorgesehen ist, während der untere Papierschichtbereich 4 vollständig beharzt ist, läßt sich jedoch nur ausgesprochen schwer erreichen. Fig. 2 zeigt einen den tatsächlichen Verhältnissen angenäherten Zustand in einem Diagramm. Dabei ist auf der Y-Achse die Konzentration c in Prozent und auf der X-Achse die Schichtdicke d der Papierschicht 1 ebenfalls in Prozent aufgetragen, wobei die Schichtdicke d bei der Unterseite 5 beginnt und an der Oberseite 2 endet. Erkennbar ist, daß im unteren Papierschichtbereich 4 von der Unterseite ausgehend in Richtung zur Oberseite 2 ein Konzentrationsgefälle mit einer relativ geringen Steigung besteht. Grundsätzlich ist es auch möglich, daß der der Unterseite 5 benachbarte Bereich sehr stark durchbeharzt ist und dort überhaupt kein Konzentrationsgefälle besteht, sich das Konzentrationsgefälle also im Bereich 4 erst später ergibt. An der Stelle x, die den Übergang vom unteren Papierschichtbereich 4 zum oberen Papierschichtbereich 3 darstellt, tritt ein Konzentrationsgefälle mit einer sehr viel größeren Steigung auf. Hierbei nimmt die Konzentration sehr viel stärker ab und verringert sich letztlich bis zur Oberseite 2 hin vorliegend bis auf etwa 0%.

In Fig. 3 sind zwei weitere alternative Kurven dargestellt. Die obere Kurve zeigt die ideale Konzentrationsverteilung des Harzes, wobei im unteren Papierschichtbereich 4 die Harzkonzentration konstant 100% beträgt und an der Stelle x, das heißt am Übergang zum oberen Papierschichtbereich 3 schlagartig auf 0% abnimmt. Die untere Kurve zeigt gegenüber der idealen Kurve einen stärken Konzentrationsabfall von der Unterseite 5 bis zum Übergang zum oberen Papierschichtbereich 3, das heißt bis zur Stelle x, wobei das Konzentrationsgefälle anschließend jedoch erheblich stärker abfällt, die Steigung des Konzentrationsabfalls also noch immer wenigstens mehr als doppelt so groß ist wie im unteren Papierschichtbereich 4. Der jeweilige Verlauf des Konzentrationsgefälles hängt von den jeweiligen Einsatzparametern, insbesondere der Porosität bzw. Saugfähigkeit der Papierschicht 1 und der Viskosität des Harzes sowie den Prozeßparametern beim Aufbringen des Harzes auf die Unterseite 5 ab.

Letztlich sind der obere Papierschichtbereich 3 und der untere Papierschichtbereich 4 aber dadurch gekennzeichnet, daß der Konzentrationsabfall des Harzanteils im oberen Papierschichtbereich 3 wenigstens um den Faktor 2 größer ist als im unteren Papierschichtbereich 4. Dabei versteht es sich, daß der Konzentrationsabfall sehr viel größer als der Faktor 2 sein kann, wie insbesondere die Idealkurve in Fig. 3 belegt. Letztlich ist jeder einzelne beliebige Wert ab dem Faktor 2 und oberhalb des Faktors 2 möglich.

Bei den dargestellten Ausführungsfbrmen ist es so, daß der obere Papierschichtbereich 3 sich über maximal 30% der Dicke d der Papierschicht 1 erstreckt. In den in Fig. 2 und 3 dargestellten Anwendungsfällen macht der obere Papierschichtbereich 3 etwa 10% bis 20% der Dicke d der Papierschicht 1 aus. In allen Anwendungsfällen ist es so, daß sich an der Druckseite 2 kein oder nur ein sehr geringer Harzanteil befindet. Die optimale Erstreckung des oberen Papierschichtbereichs 3 liegt zwischen 3% bis 20% der Dicke d der Papierschicht 1. Je nach Beschaffenheit des Papiers und der verwendeten Druckfarbe ergibt sich dann ein optimales Druckergebnis, da die Druckfarbe letztlich nur über einen sehr geringen Bereich der Papierschicht 1 aufgenommen werden und nicht verlaufen kann.

Allerdings ist darauf hinzuweisen, daß die vorliegende Erfindung nicht auf das in den Fig. 2 und 3 dargestellte Konzentrationsgefälle beschränkt ist. Grundsätzlich ist es auch möglich, daß der obere Papierschichtbereich 3 größer als 30% ist und/oder sich beispielsweise ein konstantes Konzentrationsgefälle von der Unterseite 5 zur Oberseite 2 der Papierschicht 1 ergibt. Wesentlich ist hingegen, daß auf die Oberseite der Papierschicht 1 eine separate, auf der Papierschicht 1 aufliegende Farbaufnahmeschicht 6 vorgesehen ist, wie dies in Fig. 1 dargestellt ist, auf deren Oberseite 7, wie in Fig. 4 dargestellt ist, eine Farbschicht 8 aufgebracht ist. Die Oberseite 7 der Farbaufnahmeschicht 6 bildet damit die Druckseite. Durch die Farbaufnahmeschicht 6 wird letztlich ein direkter oder unmittelbarer Kontakt der Farbschicht 8 mit der Oberseite 2 der Papierschicht 1 vermieden. Die Farbaufnahmeschicht 6 befindet sich vollflächig auf der gesamten Oberseite 2 der Papierschicht 1 und deckt diese vollständig ab. Das Flächengewicht der Farbaufnahmeschicht 6 liegt üblicherweise zwischen 0,5 g/m² und 20 g/m².

Die Farbschicht 8 ist vorliegend mittels eines nicht dargestellten Inkjet-Digitaldruckers, also mittels des Tintenstrahldruckverfahrens aufgebracht worden, wenngleich auch andere Druckverfahren, insbesondere der Tiefdruck möglich sind. Dabei werden wasserhaltige Tinten als Druckfarben eingesetzt.

In Fig. 5 ist ausschnittweise ein bedrucktes flächiges Bauteil 9 dargestellt. Bei dem Bauteil 9 kann es sich insbesondere um eine Platte oder ein Paneel handeln. Bevorzugt handelt es sich um Boden-, Wand- und/ oder Deckenbelagselemente oder aber um plattenförmige Möbelelemente. Das Bauteil 9 weist einen nur ausschnittweise dargestellten flächigen Grundkörper 10 auf, der ein- oder mehrlagig aufgebaut sein kann und insbesondere aus Holz- und/oder Kunststoffwerkstoffen besteht. Insbesondere kann es sich bei dem Bauteil 9 um Holzwerkstoffplatten, wie MDF-, HDF- oder DKS-Platten oder um sogenannte HPL (High Pressure Laminate)-Platten handeln. Bei dem Bauteil 9 kann es sich aber auch um dickere Folien, Pappe oder Gipskartonplatten handeln.

Bei dem in Fig. 5 dargestellten Bauteil 9 ist auf die Oberseite 11 des Grundkörpers 10 die bedruckte Papierschicht 1 mit Farbaufnahmeschicht 6 aufgebracht und fest damit verbunden. Desweiteren ist auf die Farbschicht 8 eine Schutzschicht 12 aufgebracht. Die Schutzschicht 12, die ebenfalls beharzt ist, dient zum Schutz der Farbschicht 8 vor UV-Strahlung und insbesondere vor mechanischer Beschädigung. Damit die Farbschicht 8 noch erkennbar ist, ist die Schutzschicht 12 transparent. In die Schutzschicht 12 können sehr harte Partikel, wie Korund, eingelagert sein. Hinzuweisen ist darauf, daß die Schutzschicht 12 in der Regel bei solchen Bauteilen realisiert wird, die im Bodenbereich eingesetzt werden. Grundsätzlich kann auf die Schutzschicht 12 aber auch verzichtet werden. Dies gilt insbesondere bei Wand- und Deckenanwendungen und bei Möbelelementen. Erfindungsgemäss ist eine Schutzschicht vorgesehen.

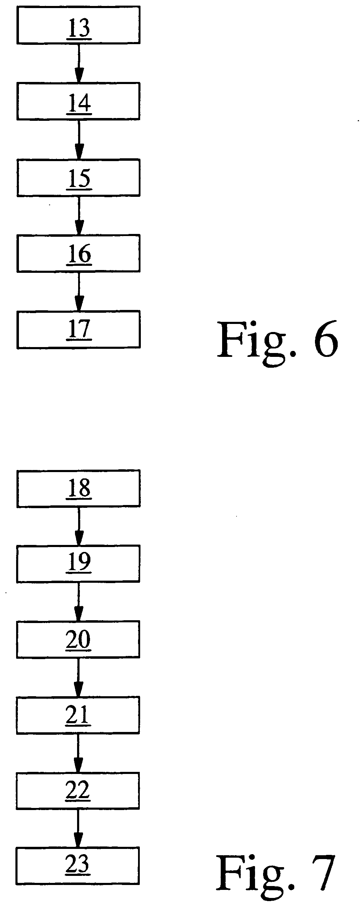

In Fig. 6 ist schematisch das erfindungsgemäße Verfahren bei einem Kurztaktpreßverfahren dargestellt. Das Verfahren beginnt mit der an sich bekannten Herstellung des Papiers in einer Papiermaschine, was im Verfahrensschritt 11 dargestellt ist. Die Papierschicht 1 ist dabei noch Teil einer quasi unendlichen Papierbahn. Nach der Papierherstellung im Verfahrensschritt 13 erfolgt im Verfahrensschritt 14 die (definierte) Teilbeharzung der Papierschicht 1 von der Unterseite 5 her derart, daß der untere Papierschichtbereich vorliegend etwa 85% der Dicke d der Papierschicht 1 ausmacht, während der obere Papierschichtbereich 3 dann etwa 15% bis 20% der Dicke ausmacht. Grundsätzlich läßt sich die definierte Teilbeharzung im Verfahrensschritt 14 dadurch erzeugen, daß die bahnförmige Papierschicht 1 nach ihrer Herstellung mit ihrer Unterseite 5 über oder an einer drehbaren Walze vorbei geführt wird, die in flüssiges Harz eintaucht. Durch Kontakt der Unterseite 5 der Papierschicht 1 mit der Walze wird Harz von der Papierschicht aufgenommen. Die Menge des auf die Unterseite der Papierschicht 1 aufgebrachten Harzes hängt von verschiedenen Prozeßparametern ab, die bedarfsweise einzustellen sind. Es versteht sich, daß statt der zuvor erwähnten Beharzung mittels einer Walze andere Verfahrensmöglichkeiten der Beharzung bestehen, beispielsweise über einen Düsenauftrag.

Während die zuvor beschriebene Teilbeharzung von der Unterseite 5 her grundsätzlich ausreichend ist, um einen im Vergleich zum unteren Papierschichtbereich 4 relativ schmalen oberen Papierschichtbereich 3 zu erhalten, kann es sich grundsätzlich auch anbieten, daß unmittelbar vor der Teilbeharzung auf die Druckseite 2 der Papierschicht 1 eine Sperrflüssigkeit definiert aufgebracht wird, die in die Papierschicht 1 eindringt und dabei eine Sperrschicht für das Harz bildet. Die Dicke der Sperrschicht entspricht im wesentlichen der Dicke des späteren oberen Papierschichtbereichs 3. Wichtig ist, daß die Sperrflüssigkeit sich nicht mit dem Harz mischt. Nach dem Teilbeharzen wird die Papierschicht 1 dann erwärmt, so daß die Sperrflüssigkeit verdampft. In diesem Zusammenhang kann es sich anbieten, in der Sperrflüssigkeit Feststoffe vorzusehen, die nach dem Verdampfen im oberen Papierschichtbereich 3 verbleiben.

In dem Verfahrensschritt 13 vor der Teilbeharzung, im Verfahrensschritt 14 der Teilbeharzung oder auch nach der Teilbeharzung kann die Farbaufnahmeschicht 6 mit der gewünschten Schichtdicke bzw. dem gewünschten Flächengewicht aufgebracht werden. So kann beispielsweise vorgesehen sein, daß direkt nach der Papierherstellung, also der Herstellung einer Papierbahn, die Farbaufnahmeschicht aufgebracht wird und anschließend im nächsten Verfahrensschritt beharzt wird. Die Farbaufnahmeschicht 6 kann aber auch zusammen mit der Sperrflüssigkeit auf die Oberseite 2 der Papierschicht 2 aufgebracht werden, wobei anschließend die Sperrflüssigkeit verdampft wird und die Farbaufnahmeschicht 6 verbleibt. Grundsätzlich kann auch erst nach der Teilbeharzung die Aufbringung der Farbaufnahmeschicht 6 erfolgen.

In jedem Falle erfolgt erst nach der Teilbeharzung im Verfahrensschritt 14 und der Aufbringung der Farbaufnahmeschicht 6 im Verfahrensschritt 15 die Bedruckung und damit der Auftrag der Farbschicht 8. Die Bedruckung erfolgt im Tintenstrahldruckverfahren über Inkjet-Digitaldrucker. Beim Bedrucken kann die Papierschicht 1 noch Teil einer Papierbahn sein oder bereits Teil eines von der Papierbahn abgeschnittenen Bogens. Das Schneiden auf Bögen kann auch an späterer Stelle erfolgen.

Parallel zum Verfahrensschritt 15 wird der Verfahrensschritt 16, nämlich die Beheizung der Druckseite und damit die Trocknung der Farbschicht 6 direkt nach dem Aufbringen auf die Farbaufnahmeschicht 6, vorgenommen. Hinzuweisen ist darauf, daß die Papierschicht 1 mit Farbaufnahmeschicht 6 grundsätzlich auch schon vor dem Bedrucken beheizt bzw. erwärmt worden sein kann, so daß die Farbe beim Bedrucken bereits auf eine vorerwärmte Papierschicht 1 trifft, was die Trocknung unterstützt. Erfindungsgemäss muss währen dem Drucken getrocknet werden.

Im Verfahrensschritt 17 wird die Papierschicht 1 mit dem Grundkörper 10 in einer entsprechenden Preßeinrichtung verpreßt. Gleichzeitig wird auch die Schutzschicht 12 verpreßt. Unter dem Druck und der Hitze der Preßplatten der Preßvorrichtung schmilzt das Harz in der Papierschicht 1 und das Harz in der Schutzschicht 12 und härtet während des Preßvorganges unmittelbar aus, so daß sich einerseits eine feste Verbindung der Papierschicht 1 zum Grundkörper 10 und andererseits eine feste Verbindung der Schutzschicht 12 auf der Papierschicht 1 ergibt. Dabei kommt es im übrigen zu einer derart festen Verbindung zwischen der Schutzschicht 12 und der Papierschicht 1, daß ein unbeabsichtigtes Ablösen der Schutzschicht 12 nicht befürchtet werden muß. ten, auf den Grundkörper 10, jedoch noch ohne Schutzschicht 12, durch Verpressen in der erwähnten Preßeinrichtung aufgebracht wird.

In Fig. 7 ist schematisch ein nicht erfindungsgemäßes Kurztaktpreßverfahrens der Direktbeschichtung dargestellt. Die Verfahrensschritte 18 und 19 entsprechen dabei den zuvor erwähnten Verfahrensschritten 13 und 14 der Papierherstellung und Teilbeharzung. Hieran schließt sich jedoch der Verfahrensschritt 20 an, wobei die Papierschicht 1 mit Farbaufnahmeschicht 6, bereits auf Bogen geschnitten, auf den Grundkörper 10, jedoch noch ohne Schutzschicht 12, durch Verpressen in der erwähnten Preßeinrichtung aufgebracht wird.

Nach dem Verpressen der noch unbedruckten Papierschicht 1 auf dem Grundkörper 12 wird das unbedruckte Bauteil 9 nunmehr im Verfahrensschritt 21 ebenfalls im Tintenstrahldruckverfahren bedruckt. Parallel dazu oder unmittelbar anschließend erfolgt die Trocknung der aufgebrachten Farbschicht 8 im Verfahrensschritt 22. Auch hier kann natürlich eine Vorerwärmung der Papierschicht 1 bzw. der Farbaufnahmeschicht 6 vorgenommen worden sein. Hieran schließt sich die Verpressung der Schutzschicht 12 in der Preßvorrichtung im Verfahrensschritt 23 an, um die Schutzschicht 12 nach Schmelzen und Aushärten des Harzes in der Schutzschicht 12 mit der Papierschicht 1 zu verbinden.

Wenngleich das in Fig. 7 schematisch dargestellte Verfahren verfahrensmäßig aufwendiger ist, hat es den Vorteil, daß nicht bedruckte Bauteile 9 ohne weiteres vorgehalten werden können und die Bedruckung dann je nach Kundenwunsch bedarfsweise kurzfristig erfolgen kann.

### Bezugszeichenliste:

- 1: Papierschicht
- 2: Oberseite
- 3: oberer Papierschichtbereich
- 4: unterer Papierschichtbereich
- 5: Unterseite
- 6: Farbaufnahmeschicht
- 7: Oberseite
- 8: Farbschicht
- 9: Bauteil
- 10: Grundkörper
- 11: Oberseite
- 12: Schutzschicht
- 13: Papierherstellung
- 14: Teilbeharzung
- 15: Bedruckung
- 16: Trocknung
- 17: Verpressung
- 18: Papierherstellung
- 19: Teilbeharzung
- 20: Verpressung
- 21: Bedruckung
- 22: Trocknung
- 23: Verpressung

## Patentansprüche

1. Verfahren zum Herstellen eines flächigen, bedruckten Bauteils (9), insbesondere für Boden-, Wand-, Decken-, und/oder Möbelanwendungen, wobei auf einen flächigen Grundkörper (10) des Bauteils (9) eine beharzte, mit einer Farbschicht (8) bedruckte Papierschicht (1) unter Druck- und Hitzeeinfluß aufgebracht wird,
**dadurch gekennzeichnet,**
**daß** die aufgebrachte Farbschicht (8), während dem Drucken mittels wenigstens einer Heizeinrichtung getrocknet wird, daß die Heiztemperatur zwischen 30°C und 150°C liegt, so daß sich eine unmittelbare Trocknung von aufgebrachter Tinte ergibt, wobei die Tinte wasserhaltig ist und die Heizeinrichtung eine Infrarot-, insbesondere NIR-, und/oder eine Mikrowellenheizeinrichtung ist, und daß die Papierschicht (1) im Kurztaktpressverfahren mit dem Grundkörper (10) und einer Schutzschicht (12), die ebenfalls beharzt und auf die Farbschicht (8) aufgebracht ist, verpresst wird, wobei die Temperatur beim Verpressen zwischen 140°C und 200°C liegt.

2. Verfahren nach Anspruch 1, **dadurch gekennzeichnet, daß** die Papierschicht (1) nicht vollständig durchbeharzt ist, wobei die Oberfläche der Papierschicht (1) zumindest teilweise, vorzugsweise zumindest im wesentlichen harzfrei ist, und wobei auf die Oberseite (2) der Papierschicht (1) eine separate, auf der Papierschicht (1) aufliegende Farbaufnahmeschicht (6) aufgebracht wird, die zum Aufbringen der Farbschicht (8) vorgesehen ist.

3. Verfahren nach Anspruch 1 oder 2, **dadurch gekennzeichnet, daß** die Farbschicht (8) unmittelbar auf die Farbaufnahmeschicht (6) aufgebracht wird und/oder daß die Farbaufnahmeschicht (6) vollflächig auf die gesamte Oberseite (2) der Papierschicht (1) aufgebracht wird und/oder daß die Farbaufnahmeschicht (6) die Oberseite (2) der Papierschicht (1) vollständig abdeckt.

4. Verfahren nach einem der vorhergehenden Ansprüche, **dadurch gekennzeichnet, daß** die Papierschicht (1) derart definiert von der Unterseite (5) her beharzt wird, daß der der Druckseite (2) zugewandte obere Papierschichtbereich (3) mit geringem oder ohne Harzanteil sich über maximal 30% der Dicke (d) der Papierschicht (1) erstreckt.

5. Verfahren nach einem der vorhergehenden Ansprüche, **dadurch gekennzeichnet, daß** die Menge des der Unterseite (5) zugeführten Harzanteils in Abhängigkeit der Viskosität des Harzes und Saugfähigkeit der Papierschicht (1) verfahrenstechnisch definiert gesteuert wird.

6. Verfahren nach einem der vorhergehenden Ansprüche, **dadurch gekennzeichnet, daß** die Papierschicht (1) vor der Beharzung von der Oberseite (2) her mit einer sich nicht mit dem Harz mischenden Sperrflüssigkeit und/oder einer Partikel der Farbaufnahmeschicht aufweisenden Flüssigkeit getränkt wird.

7. Verfahren nach einem der vorhergehenden Ansprüche, **dadurch gekennzeichnet, daß** die Papierschicht (1) von der Oberseite (2) her derart definiert mit der Sperrflüssigkeit und/oder der Partikel der Farbaufnahmeschicht aufweisenden Flüssigkeit getränkt wird, daß sich eine sich über maximal 30% der Dicke (d) der Papierschicht (1) erstreckende Sperrschicht für das Harz bildet.

8. Verfahren nach einem der vorhergehenden Ansprüche, **dadurch gekennzeichnet, daß** die Sperrflüssigkeit und/oder die Partikel der Farbaufnahmeschicht aufweisende Flüssigkeit nach dem Beharzen der Papierschicht (1) verdampft wird.

9. Verfahren nach einem der vorhergehenden Ansprüche, **dadurch gekennzeichnet, daß** die Beharzung vor, während oder nach Aufbringen der Farbaufnahmeschicht (6) erfolgt.

10. Verfahren nach einem der vorhergehenden Ansprüche, **dadurch gekennzeichnet, daß** die Papierschicht (1) vor oder nach dem Aufbringen auf den Grundkörper (10) bedruckt wird.

11. Verfahren nach einem der vorhergehenden Ansprüche, **dadurch gekennzeichnet, daß** die Papierschicht (1) erst nach dem Aufbringen der Farbaufnahmeschicht (6) und nach dem Beharzen bedruckt wird.

## Claims

1. Method for producing a planar, printed component (9), in particular for floor, wall, ceiling and/or furniture applications, a resin-treated paper layer (1) which is printed with an ink layer (8) being applied under the influence of pressure and heat to a planar base body (10) of the component (9),
**characterized**
**in that** the ink layer (8) applied is dried during the printing by means of at least one heating device, in that the heating temperature is between 30°C and 150°C, resulting in immediate drying of applied ink, the ink being water-containing and the heating device being an infrared, particularly NIR, and/or microwave heating device, and in that the paper layer (1) is pressed, in a short-cycle pressing method, with the base body (10) and a protective layer (12) which is also resin-treated and applied to the ink layer (8), the temperature during the pressing being between 140°C and 200°C.

2. Method according to Claim 1, **characterized in that** the paper layer (1) is not completely resinated throughout, the surface of the paper layer (1) being at least partly, preferably at least substantially, resin-free, and a separate ink acceptance layer (6) which rests on the paper layer (1) and is intended for application of the ink layer (8) being applied to the top (2) of the paper layer (1).

3. Method according to Claim 1 or 2, **characterized in that** the ink layer (8) is applied directly to the ink acceptance layer (6) and/or **in that** the ink acceptance layer (6) is applied to the entire top (2) of the paper layer (1) over the whole area and/or **in that** the ink acceptance layer (6) completely covers the top (2) of the paper layer (1).

4. Method according to any of the preceding claims, **characterized in that** the paper layer (1) is resin-treated in a defined manner from the bottom (5) in such a way that the upper paper layer region (3) facing the printed side (2) and comprising little or no resin extends over not more than 30% of the thickness (d) of the paper layer (1).

5. Method according to any of the preceding claims, **characterized in that** the amount of resin fed to the bottom (5) is controlled in a defined manner by means of the process as a function of the viscosity of the resin and absorptivity of the paper layer (1).

6. Method according to any of the preceding claims, **characterized in that** the paper layer (1), prior to the resin treatment, is impregnated from the top (2) with a barrier liquid which does not mix with the resin and/or with a liquid comprising particles of the ink acceptance layer.

7. Method according to any of the preceding claims, **characterized in that** the paper layer (1) is impregnated from the top (2) in a defined manner with the barrier liquid and/or the liquid comprising particles of the ink acceptance layer, in such a way that a barrier layer for the resin, which extends over at most 30% of the thickness (d) of the paper layer (1), forms.

8. Method according to any of the preceding claims, **characterized in that** the barrier liquid and/or the liquid comprising particles of the ink acceptance layer is evaporated after the resin treatment of the paper layer (1).

9. Method according to any of the preceding claims, **characterized in that** the resin treatment is effected before, during or after application of the ink acceptance layer (6).

10. Method according to any of the preceding claims, **characterized in that** the paper layer (1) is printed on before or after the application to the base body (10).

11. Method according to any of the preceding claims, **characterized in that** the paper layer (1) is printed only after the application of the ink acceptance layer (6) and after the resin treatment.

## Revendications

1. Procédé de fabrication d'un élément plat imprimé (9), notamment pour des applications sur des sols, des murs, des plafonds et/ou des meubles, dans lequel une couche de papier (1) imprégnée avec de la résine, imprimée avec une couche d'encre (8) est appliquée sous l'action d'une pression et de chaleur sur un corps de base plat (10) de l'élément (9), **caractérisé en ce que** la couche d'encre appliquée (8) est séchée au cours de l'impression au moyen d'au moins un dispositif de chauffage ; **en ce que** la température de chauffage se situe entre 30 °C et 150 °C d'une manière telle que l'on obtient un séchage immédiat de l'encre appliquée ; dans lequel l'encre contient de l'eau et le dispositif de chauffage représente un dispositif de chauffage à infrarouge, en particulier un dispositif de chauffage à infrarouge proche et/ou un dispositif de chauffage par micro-ondes ; et **en ce que** la couche de papier (1), au cours du procédé de pression du type à cycle court est comprimé avec le corps de base (10) et avec une couche de protection (12) qui est également imprégnée avec de la résine et appliquée sur la couche d'encre (8) ; dans lequel la température au cours de la compression se situe entre 140 °C et 200 °C.

2. Procédé selon la revendication 1, **caractérisé en ce que** la couche de papier (1) n'est pas complètement imprégnée avec de la résine ; dans lequel la surface de la couche de papier (1) est au moins en partie, de préférence au moins de manière essentielle exempte de résine, et dans lequel on applique, sur le côté supérieur (2) de la couche de papier (1), une couche de réception d'encre séparée (6) s'appuyant sur la couche de papier (1), qui est prévue pour l'application de la couche d'encre (8).

3. Procédé selon la revendication 1 ou 2, **caractérisé en ce que** la couche d'encre (8) est appliquée directement sur la couche réceptrice d'encre (6) et/ou **en ce que** la couche réceptrice d'encre (8) est appliquée sur l'ensemble de la surface de la totalité du côté supérieur (2) de la couche de papier (1) et/ou **en ce que** la couche réceptrice d'encre (6) recouvre totalement le côté supérieur (2) de la couche de papier (1).

4. Procédé selon l'une quelconque des revendications précédentes, **caractérisé en ce que** la couche de papier (1) est imprégné de résine de manière définie à partir du côté inférieur (5), de manière à ce que la zone supérieure de la couche de papier (3) orientée dans la direction du côté d'impression (2), qui comprend une fraction de résine faible ou nulle, s'étende sur un maximum de 30 % de l'épaisseur (d) de la couche de papier (1).

5. Procédé selon l'une quelconque des revendications précédentes, **caractérisé en ce que** la quantité de la fraction de résine acheminée au côté inférieur (5) est réglée de manière définie pour des raisons techniques liées au procédé, en fonction de la viscosité de la résine et de la capacité d'absorption de la couche de papier (1).

6. Procédé selon l'une quelconque des revendications précédentes, **caractérisé en ce que** la couche de papier (1) est imprégnée avant l'imprégnation avec de la résine à partir du côté supérieur (2) avec un liquide d'étanchéité non miscible avec la résine et/ou avec un liquide présentant des particules de la couche réceptrice d'encre.

7. Procédé selon l'une quelconque des revendications précédentes, **caractérisé en ce que** la couche de papier (1) est imprégnée d'une manière définie à partir du côté supérieur (2) avec le liquide d'étanchéité et/ou avec le liquide présentant des particules de la couche réceptrice d'encre, de manière à former une couche d'étanchéité pour la résine qui s'étend sur un maximum de 30 % de l'épaisseur (d) de la couche de papier (1).

8. Procédé selon l'une quelconque des revendications précédentes, **caractérisé en ce que** le liquide d'étanchéité et/ou le liquide présentant des particules de la couche réceptrice d'encre est/sont évaporé(s) après l'imprégnation de la couche de papier (1) avec de la résine.

9. Procédé selon l'une quelconque des revendications précédentes, **caractérisé en ce que** l'imprégnation avec de la résine a lieu avant, pendant ou après l'application de la couche réceptrice d'encre (6).

10. Procédé selon l'une quelconque des revendications précédentes, **caractérisé en ce que** la couche de papier (1) est imprimée avant ou après l'application sur le corps de base (10).

11. Procédé selon l'une quelconque des revendications précédentes, **caractérisé en ce que** la couche de papier (1) n'est imprimée qu'après l'application de la couche réceptrice d'encre (6) et après l'imprégnation avec de la résine.
